(19) Europäisches Patentamt
European Patent Office
Office européen des brevets

(11) Publication number: 0 222 582 B1

(12) # EUROPEAN PATENT SPECIFICATION

(45) Date of publication of the patent specification: 09.05.90

(51) Int. Cl.[5]: C08G 59/68, C08L 63/00, C08L 83/04, C08L 33/00

(21) Application number: 86308574.2

(22) Date of filing: 04.11.86

(54) **Epoxy siloxy U.V. curable polymeric composition.**

(30) Priority: 07.11.85 US 796055

(43) Date of publication of application: 20.05.87 Bulletin 87/21

(45) Publication of the grant of the patent: 09.05.90 Bulletin 90/19

(84) Designated Contracting States: DE ES FR GB IT

(56) References cited:
EP-A- 0 118 044
GB-A- 2 072 190
US-A- 3 629 308

(73) Proprietor: UVEXS INCORPORATED, 1025 Terra Bella Avenue, Mountain View California 94043(US)

(72) Inventor: Puder, Allen Brent, 10117 Adriana Avenue, Cupertino California 94043(US)
Inventor: Willy, William Edward, 51733 Alta Vista Drive, Oakhurst California 94043(US)

(74) Representative: Laredo, Jack Joseph et al, Elkington and Fife Beacon House 113 Kingsway, London, WC2B 6PP(GB)

EP 0 222 582 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to ultraviolet radiation curable compositions. More specifically, this invention relates to ultraviolet radiation curable compositions comprising epoxy resins and polyorganosiloxanes containing polyether groups.

Epoxy resins are limited in their utility because of certain properties of the uncured composition and also of the cured product. The cure rate is too slow for many applications. Epoxy resins exhibit too much shrinkage during curing for many applications. The flow characteristics are not adequate for some coating applications such as in circuit board coating and paper coatings without the use of modifiers, including solvents. The epoxy resins are often too brittle for many coating uses to provide the desired protective properties. The ability to cure epoxy resins by thermal means also limits the utility of these material to uses where the substrates can withstand the required temperatures of curing.

The use of ultraviolet radiation to cure epoxy resins is an advance in the art which helps overcome some of the above limitations. The use of photosensitive aromatic onium salts to promote the cure of epoxy resins when exposed to ultraviolet radiation is described by Crivello in U.S. Patent No. 4,058,401, issued November 15, 1977; in U.S. Patent No. 4,138,255, issued February 6, 1979; and in U.S. Patent No. 4,161,478, issued July 17, 1979; where these three patents teach the photosensitive aromatic onium salts and the methods of using these onium salts to cure epoxy resins by ultraviolet radiation.

The present invention relates to an ultraviolet-initiated, cationically curable liquid coating composition comprising a cationically curable polyepoxide, a polysiloxane carrying a plurality of hydroxyalkyl groups, and a photoinitiator and/or photosensitizer for an ultraviolet-activated cationic cure.

This invention more specifically relates to a composition curable by exposure to ultraviolet radiation comprising (A) a cationically curable organic epoxide having at least two epoxy groups per molecule, (B) a polyorganosiloxane having at least two hydroxyl-functional polyether groups bonded to the polyorganosiloxane through a silicon-carbon bond, and (C) a photosensitive aromatic onium salt.

The epoxides of (A) can be any of those which are well known in the art, preferably the epoxides are those epoxy resins which are liquid at room temperature to permit easy handling without the use of solvents. The epoxy resins are preferably cycloaliphatic epoxy resins and are those which have at least two epoxy groups per molecule. The epoxy resins are commercially available and include those which are available from Union Carbide Chemicals and Plastics Division of Union Carbide Corporation and are known as ERL-4206 a low viscosity liquid cycloaliphatic epoxy resin having a viscosity of less than 0.013 Pas (13 centipoises) at 25 degrees C and an epoxy equivalent, G./G. Mol oxirane oxygen of 70 to 74; ERL-4221 a low viscosity liquid cycloaliphatic epoxy resin having a viscosity of 0.35 to 0.45 Pas (350 to 450 centipoises) at 25 degrees C and an epoxy equivalent of 131 to 143; ERL-4234 a high viscosity liquid cycloaliphatic epoxy resin having a viscosity of 10 to 18 Pas (10,000 to 18,000 centipoises) at 100 degrees F and an epoxy equivalent of 143 to 157; and ERL-4299 a low viscosity liquid cycloaliphatic epoxy resin having a viscosity of 0.55 to 0.75 Pas (550 to 750 centipoises) at 25 degrees C and an epoxy equivalent of 190 to 210. Araldite® CY-179 sold by Ciba-Geigy Corporation is a diepoxy carboxylate cycloaliphatic liquid epoxy resin which is equivalent to ERL-4221. Another cycloaliphatic epoxy resin which is commercially available is Eponex® 1510, also identified as DRH 151, sold by Shell Oil Company. Eponex 1510 is isopropylidene[4,4'-bis(2,3-epoxypropoxy)cyclohexane].

Some of the epoxy resins, which are included but not limited thereto, are those of the following formulae

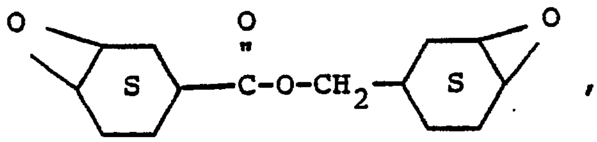

,

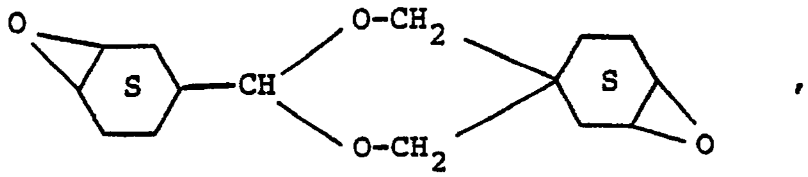

,

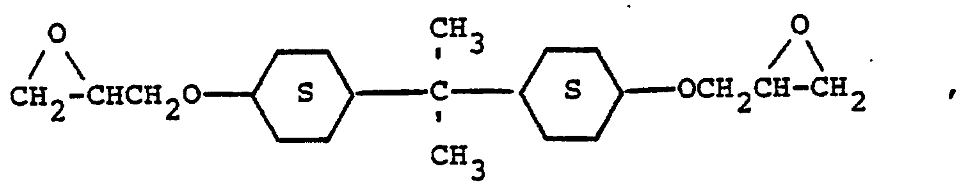

,

and

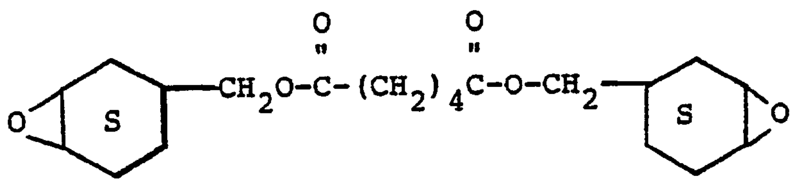

For the purposes of this invention, the term epoxy resin includes those compounds with at least two epoxy groups per molecule, as well as, those which are polymeric such as the reaction products of epichlorohydrin and phenol or a phenolformaldehyde resin, diepoxy resins, epoxidized oils, and epoxidized polyolefins.

The polyorganosiloxane (B) is a siloxane polymer which has at least two hydroxyl-functional polyether groups bonded to silicon atoms of the siloxane polymer through a silicon-carbon bond. These polyorganosiloxanes are preferably liquid. For making clear coatings, the polyorganosiloxanes are preferably compatible with the epoxide (A) or become compatible through the reaction of (A) and (B) or by curing of the composition. The hydroxyl-functional polyether groups bonded to the silicon atoms through a silicon-carbon bond can have the following formula $HO(R'O)_nR''$- in which R′ is an alkylene radical having 2 to 10 carbon atoms, R" is an alkylene radical having 2 to 10 carbon atoms, and n is at least one, preferably 2 to 20.

The polyorganosiloxane (B) has at least two units of the general unit formula

$$HO(R'O)_nR''\overset{R_a}{\overset{|}{Si}}O_{\frac{3-a}{2}}$$

wherein R is a monovalent hydrocarbon radical containing from 1 to 12 carbon atoms, R′ is an alkylene radical containing from 2 to 10 carbon atoms, R" is an alkylene radical containing from 1 to 12 carbon atoms, n is an integer having a value of from 1 to 30, and a has a value of from 0 to 2. The remaining units of the polyorganosiloxane can be those of the general unit formula

$$R_b'''SiO_{\frac{3-b}{2}}$$

in which R‴ is a monovalent hydrocarbon radical containing from 1 to 12 carbon atoms and b has a value of from 1 to 3. The preferred polyorganosiloxanes are those in which R‴ is a methyl radical, R" is a propylene radical, and R′ is either an ethylene radical, a propylene radical, or a mixture of ethylene and propylene radicals. R can be illustrated by alkyl radicals, such as methyl, ethyl, propyl, butyl, and decyl radicals; cycloalkyl radicals, such as cyclohexyl and cyclopentyl radicals; aryl radicals, such as phenyl, tolyl, xylyl, and naphthyl radicals; aralkyl radicals, such as benzyl and beta-phenylethyl radicals; alkenyl radicals, such as vinyl, allyl, and hexenyl radicals; and cycloalkenyl, such as cyclohexenyl radicals. R′ can be illustrated by the alkylene radicals such as ethylene, 1,2- propylene, 1,3-propylene, 1,6-hexylene, 2-ethylhexylene-1,6, and 1,12-dodecylene radicals. R" can be illustrated by methylene, ethylene, 1,2-propylene, 1,3-propylene, 1,4-butylene, and 1,12- dodecylene, preferably R" has at least 3 carbon atoms. R‴ can be the same as R as illustrated above.

The polyorganosiloxanes (B) are available commercially and are well-known in the art. The following patents show the polyorganosiloxanes which have hydroxyl functional groups and methods of preparing them: U.S. Patent No. 3,280,160, issued October 18, 1966 to Bailey; U.S. Patent No. 3,629,308, issued December 21, 1971 to Bailey et al., U.S. Patent No. 4,122,029, issued October 24, 1978 to Gee et al.

The photosensitive aromatic onium salt is a catalyst which is activated by ultraviolet radiation which in turn initiates a cationic crosslinking process. These photosensitive aromatic onium salts are known in the art and are available commercially. Some of the commercially available photosensitive aromatic onium salts include 3M Brand UV Activated Epoxy Curatives of FC-503, FC-504, FC-508, FX-512, L-9204, and L-9260 which are manufactured by the Commercial Chemicals Division of the Minnesota Mining and Manufacturing Company; and UVE-1014 Epoxy Curing Agent which is manufactured by the General Electric Company. Some examples of the photosensitive aromatic onium salts include triphenylsulfonium tetrafluoroborate, triphenylselenonium hexafluoroborate, triphenylselenonium hexafluoroarsenate, triphenylselenonium hexafluoroantimonate, phenacyl tetramethylene sulfonium hexafluoroarsenate, triphenylsulfonium fluoroborate, S-phenyldibenzothiophenium fluoroborate, triphenylsulfonium hexafluoroarsenate, S-phenylthioxanthene fluoroborate, phenacyltetramethylene sulfonium hexafluoroarsenate, triphenylsulfonium hexafluoroantimonate, tris-(3,5-dimethyl-4-hydroxy)phenyl sulfonium hexafluoroarsenate, and triphenacyl hexafluoroarsenate. These photosensitive aromatic onium salts and others are described by Crivello in the patents cited above.

The ingredients of (A), (B), and (C) are combined to provide a composition which cures upon exposure to ultraviolet radiation through a cationic crosslinking mechanism. Preferably, the ingredients are combined by mixing from 30 to 98 weight percent of (A) with 2 to 70 weight percent of (B) where the combined percentages of (A) and (B) is equal to 100 weight percent, the amount of (C) being present in a catalytic amount. Preferred compositions are made from 35 to 98 weight percent of (A) and 2 to 65 weight percent of (B) with a catalytic amount of (C). In these compositions, the preferred (A) is a cycloaliphatic epoxy resin, the preferred (B) is a polymethylsiloxane having hydroxyl terminated polyoxyethylene groups bonded to the silicon atoms through a propylene bond, and the preferred (C) is a triaryl sulfonium salt.

The compositions of this invention include those which contain blends of more than one kind of (A) and one kind of (B). For example, (B) can be a blend of two polymethylsiloxanes both having hydroxyl terminated polyoxyethylene groups bonded to the silicon atoms through a propylene radical where one polymethylsiloxane has two of the hydroxyl terminated polyoxyethylene groups in the alpha-omega positions of the siloxane and the other polymethylsiloxane has an average of about four of the hydroxyl terminated polyoxyethylene groups along the siloxane chain. Such blends permit the properties of the products which can be made from these compositions to be modified to achieve many different characteristics. The compositions of this invention cure faster than the compositions which do not contain the polyorganosiloxane. The cure rate is increased up to twice that of the epoxide which are cured by ultraviolet radiation. The compositions cure to provide slippery and glossy surfaces. These compositions cure with less shrinkage than the epoxy resins alone. The flow out properties of the compositions is improved and makes the compositions useful for coating capacitors and other surfaces which are not smooth but have irregular shapes. These compositions are useful for coating substrates which need some type of protection or surface such as paper coatings, glass coatings, and other substrates which might be sensitive to heat curing but can withstand the ultraviolet radiation such as plastics.

The compositions of this invention can be further modified by adding an acrylate resin which has at least one acrylate group per molecule. In these compositions, the preferred amounts of ingredients are 35 to 80 weight percent (A), 20 to 65 weight percent (B), and 5 to 45 parts by weight of acrylate resin based on 100 parts by weight of (A) and (B) in the composition. The addition of the acrylate resin to the composition improves the abrasion resistance of the cured coatings. These compositions can also find use as adhesives for some substrates especially glass. When the acrylate resin is added to the compositions of this invention, the presence of a photoinitiator is also preferred. The photoinitiator as used in this invention differs from the photosensitive aromatic onium salt in that it is the initiators which have been used for ultraviolet radiation cures by decomposition and the generation of free radicals such as diethoxyacetophenone, benzophenone, and other such well known photoinitiators. The acrylate resins can also be used to advantage to achieve good properties by blending two or more acrylate resins.

The compositions of this invention can also be further modified by the addition of an organic compound having at least one carbon bonded hydroxyl group and where the compound is composed of carbon, hydrogen, and oxygen. The preferred amounts of the ingredients when there is an organic compound present, is 45 to 80 weight percent (A), 20 to 55 weight percent (B), and 0.1 to 20 parts by weight of the organic compound based on 100 parts by weight of the combined weight of (A) and (B). These compositions cure fast, do provide tough films, and are useful as adhesives such as for nylon. Some of the organic compounds include phenol, furfuryl alcohol, $HOCH_2CH{=}CHCH_2OH$, $HOCH_2C{\equiv}CCH_2OH$, a blend of $HOCH_2CH{=}CHCH_2OH$ and $HOCH_2C{\equiv}CCH_2OH$,

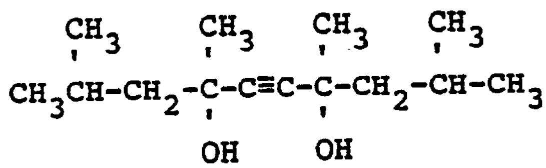 ,

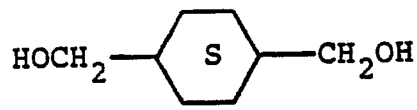 ,

and mixtures thereof.

Many other ingredients can be added to the compositions of this invention to color the films, to provide improved adhesion, to improve the heat stability, to change the viscosity of the uncured composition to make certain flow characteristics, and to improve the toughness such as through the addition of reinforcing agents. Other ingredients can be added such as other epoxy compounds, for example, an epoxy compound which has only one epoxy group per molecule which can be illustrated by (3-glycidoxypropyl)trimethoxysilane.

The compositions of the present invention can be cured to provide films which show enhanced flexibility compared to epoxy resins, exhibit adhesion properties which makes them useful for adhering many substrates together, have increased cure rates, and have improved thermal stability compared to epoxy resins. The compositions can be made to provide lower modulus films and those which show gradient curing which properties makes them useful candidates for coating optical communications fibers such as to avoid the problems which can result from microbending. The compositions of the present invention are useful without the use of solvents which adds to their usefulness because many solvents are process expensive in view of the regulations imposed on the user. The compositions of this invention cure rapidly when exposed to ultraviolet radiation, such as in about one second for thin films. One of the most useful properties resulting from the use of the compositions of this invention is the lower modulus achieved when cured compared to the epoxy resins per se.

The following examples are for illustrative purposes and should not be construed to limit the present invention which is properly delineated in the claims. Part in the following examples is parts by weight unless otherwise stated.

EXAMPLE 1

Compositions were prepared by mixing an epoxy resin of the following formula

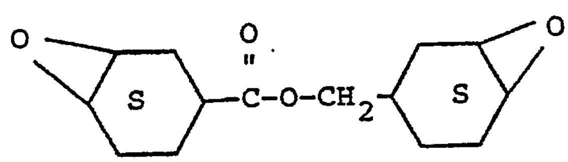 ,

with a polymethylsiloxane of the following average formula

$$HO(CH_2CH_2O)_{12}CH_2CH_2CH_2\underset{CH_3}{\overset{CH_3}{Si}}O(\underset{CH_3}{\overset{CH_3}{Si}}O)\sim_{13}-$$

$$-\underset{CH_3}{\overset{CH_3}{Si}}CH_2CH_2CH_2(OCH_2CH_2)_{12}OH$$

in the amounts shown in TABLE I in weight percentages based on the weight of the epoxy resin and the polymethylsiloxane as 100 weight percent. Each of the compositions was mixed with 4 parts of a triaryl sulfonium salt, UVE-1014 a photosensitive aromatic onium salt which is a 50 percent solution of a triaryl sulfonium salt dissolved in propylene carbonate, per 100 parts of the combined weight of the epoxy resin and the polymethylsiloxane. Each of these compositions was deposited in films and then exposed to the ultraviolet radiation from a 152 mm (six inch) sunlamp. Those films which were 3.175 mm (1/8 inch) thick cured after a 10 minute exposure. All the compositions had good cures in thin films. The films were clear, slippery, and flexible. These films had poor adhesion to glass and fair adhesion to polycarbonate and copper. The thicker films were tough but exhibited a brittle character. For comparison, a 100 watt clear light bulb was dipped into each of the above compositions and then the light bulb was burned overnight. This thermal exposure caused each of the compositions to discolor to light brown.

TABLE I

| COMPOSITION NUMBER | AMOUNT (WEIGHT PERCENT) EPOXY RESIN | POLYMETHYLSILOXANE |
|---|---|---|
| 1 | 98 | 2 |
| 2 | 95 | 5 |
| 3 | 90 | 10 |
| 4 | 85 | 15 |
| 5 | 80 | 20 |
| 6 | 70 | 30 |
| 7 | 60 | 40 |
| 8 | 50 | 50 |

EXAMPLE 2

Compositions were prepared by mixing epoxy resin as described in Example 1 with a polymethylsiloxane of the following average formula

$$(CH_3)_3SiO(\underset{CH_3}{\overset{CH_3}{Si}}O)\sim_9(\underset{CH_2CH_2CH_2(OCH_2CH_2)_{12}OH}{\overset{CH_3}{Si}}O)\sim_4Si(CH_3)_3$$

in the amounts shown in TABLE II in weight percentages based on the weight of the epoxy resin and the polymethylsiloxane as 100 weight percent. Each of the compositions was mixed with 4 parts of the photosensitive aromatic onium salt of Example 1 per 100 parts of the combined weight of the epoxy resin and the polymethylsiloxane. Compositions 9-12 were deposited in films and then exposed to the ultraviolet radiation from a 152 mm (six inch) sunlamp. Compositions 9-12 all had good cures to 1.59 mm (1/16 inch) depth and almost cured to 6.35 mm (1/4 inch) after 20 minutes exposure to the sunlamp. Composition 12 cured to a film which was more flexible than the other cured films. These compositions make good candidates for coating capacitors. The slow depth cure of these compositions suggests that the sunlamp is too low an energy source for curing by ultraviolet radiation. Compositions 13-15 were exposed to the ultraviolet radiation from a laboratory cure unit which produces high intensity ultraviolet radiation from a medium pressure mercury lamp. These compositions in thin films cured in about one second upon such exposure. The cured films from Compositions 13 and 14 were glossy and exhibited flexibility. Composition 14 cured to a film which was stretchable and flexible in long strips but was not as tough as Composition 13. Composition 15 cured to a tacky film which would suggest that the upper limit for the amount of the polymethylsiloxane is being approached.

TABLE II

| COMPOSITION NUMBER | AMOUNT (WEIGHT PERCENT) EPOXY RESIN | POLYMETHYLSILOXANE |
|---|---|---|
| 9 | 90 | 10 |
| 10 | 80 | 20 |
| 11 | 70 | 30 |
| 12 | 60 | 40 |
| 13 | 50 | 50 |
| 14 | 40 | 60 |
| 15 | 30 | 70 |

EXAMPLE 3

Compositions were prepared by mixing equal volumes of the epoxy resin of Example 1 and the polymethylsiloxane of Example 2 with an amount of a photosensitive aromatic onium salt. In Composition 16, 4 weight percent of the photosensitive aromatic onium salt of Example 1 was used. In Composition 17, 10 weight percent of a photosensitive aromatic onium salt identified as 3M Brand UV Activated Epoxy Curative FC-503 was used. In Composition 18, 10 weight percent of a photosensitive aromatic onium salt identified as 3M Brand UV Activated Epoxy Curative FC-504 was used.

EXAMPLE 4

Compositions were prepared by mixing the epoxy resin of Example 1, the polymethylsiloxane of Example 1(NO. 1), and the polymethylsiloxane of Example 2(NO. 2) in the amounts shown in TABLE III in weight percentages based on the weight of the epoxy resin and the polymethylsiloxane as 100 weight percent. Four parts of the photosensitive aromatic onium salt as defined in Example 1 was used to catalyze these compositions. Compositions 19-22 were deposited in films and then exposed to ultraviolet radiation. These compositions cure films which were rubbery, flexible, and moderately tough. Composition 19 exhibited good glass to glass adhesion.

TABLE III

| COMPOSITION NUMBER | AMOUNT (WEIGHT PERCENT) EPOXY RESIN | POLYMETHYLSILOXANE NO. 1 | POLYMETHYLSILOXANE NO. 2 |
|---|---|---|---|
| 19 | 50 | 40 | 10 |
| 20 | 50 | 30 | 20 |
| 21 | 50 | 20 | 30 |
| 22 | 50 | 10 | 40 |

EXAMPLE 5

Compositions were prepared by mixing an epoxy resin having the following formula

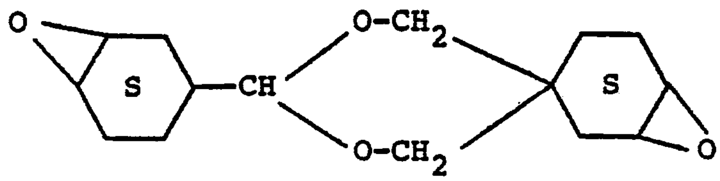

with the polymethylsiloxane of Example 2 in the amounts shown in TABLE IV in weight percentages based on the weight of the epoxy resin and the polymethylsiloxane as 100 weight percent. Compositions 23-26 were catalyzed with the photosensitive aromatic onium salt as defined in Example 1 in an amount of 8 parts based on 100 parts of the combined weight of the epoxy resin and the polymethylsiloxane in the composition. All of these compositions cure to films when exposed to ultraviolet radiation. The films exhibited a yellow color and the flexibility increased from Composition 23 to Composition 26.

TABLE IV

| COMPOSITION NUMBER | AMOUNT (WEIGHT PERCENT) EPOXY RESIN | POLYMETHYLSILOXANE |
|---|---|---|
| 23 | 90 | 10 |
| 24 | 80 | 20 |
| 25 | 70 | 30 |
| 26 | 60 | 40 |

EXAMPLE 6

Compositions were prepared by mixing an epoxy resin of the following formula

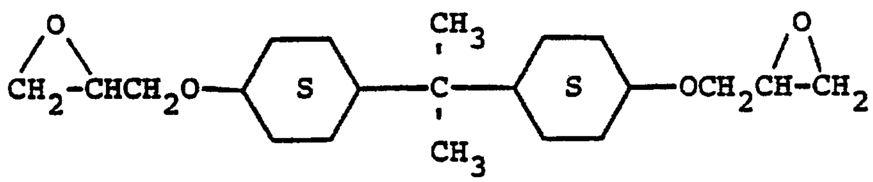

the polymethylsiloxane of Example 2 and the photosensitive aromatic onium salt of Example 1 (4 parts per 100 parts of the combined weight of the epoxy resin and the polymethylsiloxane). The amounts of the epoxy resin and the polymethylsiloxane used in each composition is shown in TABLE V in weight percentages based on the weight of the epoxy resin and the polymethylsiloxane. Compositions 27-30 were deposited in films and then exposed to ultraviolet radiation. These films cured with fair solvent resistance to acetone. The toughness of the films increased from Composition 30 to Composition 27.

TABLE V

| COMPOSITION NUMBER | AMOUNT (WEIGHT PERCENT) EPOXY RESIN | POLYMETHYLSILOXANE |
|---|---|---|
| 27 | 95 | 5 |
| 28 | 90 | 10 |
| 29 | 85 | 15 |
| 30 | 80 | 20 |

EXAMPLE 7

Compositions were prepared by mixing the epoxy resin and the polymethylsiloxane as defined in Example 1 with an acrylate resin having the following formula

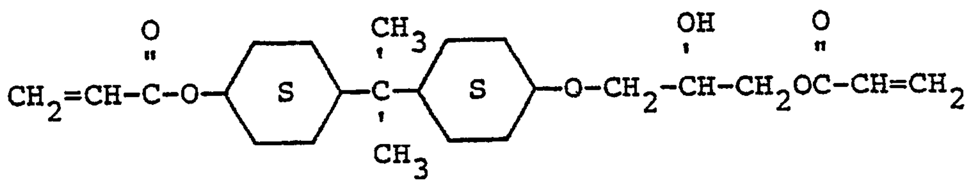

and with two parts of diethoxyacetophenone per 100 parts of the combined weight of the epoxy resin and the polymethylsiloxane and 4 parts of the photosensitive aromatic onium salt as defined in Example 1. The amounts of the epoxy resin and the polymethylsiloxane are shown in TABLE VI in weight percentages as defined in Example 1. The amount of the acrylate resin is shown in TABLE VI in parts based on 100 parts of the combined weight of the epoxy resin and the polymethylsiloxane. Compositions 31-42 deposited in a film and then exposed to the ultraviolet radiation from a 152 mm (six inch) sunlamp cure to films with slippery and glossy surfaces. Compositions 31-34 were slow to cure with the ultraviolet radiation form a sunlamp and Compositions 31-33 were milky. Composition 36 cured to a depth of 1.59 mm (1/16 inch) when exposed to the ultraviolet radiation from a 152 mm (six inch) sunlamp for 15 minutes, a tough flexible film was obtained. Composition 35 cured to a depth of 6.35 mm (1/4 inch) when exposed to the ultraviolet radiation from a six inch sunlamp for 10 minutes, an opaque white, rubbery film was obtained. Composition 39 cured to a film like the film obtained from Composition 35 except that Composition 39's film exhibited a gradient cure, i.e. the surface exposed directly to the ultraviolet radiation was cured to a higher crosslink density than the portion of the film on the substrate. Compositions 35-38 were coated on a 75 watt light bulb and cured by exposure from a sunlamp. These cured films were further cured thermally by burning the light bulb which exhibited discoloration compared to those which were cured by exposure to ultraviolet radiation.

TABLE VI

| | AMOUNTS | | |
|---|---|---|---|
| | WEIGHT PERCENT | | PARTS |
| COMPOSITION NUMBER | EPOXY RESIN | POLYMETHYLSILOXANE | ACRYLIC RESIN |
| 31 | 37.5 | 62.5 | 20 |
| 32 | 41.2 | 58.8 | 15 |
| 33 | 44.4 | 55.6 | 10 |
| 34 | 47.4 | 52.6 | 5 |
| 35 | 50 | 50 | 20 |
| 36 | 52.9 | 47.1 | 15 |
| 37 | 55.6 | 44.4 | 10 |
| 38 | 57.9 | 42.1 | 5 |
| 39 | 62.5 | 37.5 | 20 |
| 40 | 64.7 | 35.3 | 15 |
| 41 | 66.7 | 33.3 | 10 |
| 42 | 68.4 | 31.6 | 5 |

EXAMPLE 8

Compositions were prepared by mixing the epoxy resin and the polymethylsiloxane as defined in Example 1 with two acrylate resins, one acrylate resin being the same as the one defined in Example 7(NO. 1) and the other acrylate resin was a triacrylic resin CMD-26870 which is from the Celanese Corporation and which has three acrylate groups per molecule(NO. 2), two parts of diethoxyacetophenone per 100 parts of the epoxy resin and the polymethylsiloxane, and 4 parts of the photosensitive aromatic onium salt as defined in Example 1. The amounts of the epoxy resin and the polymethylsiloxane are shown in TABLE VII in weight percentages as defined in Example 1. The amounts of the acrylate resins are shown in TABLE VII in parts based on 100 parts of the combined weight of the epoxy resin and the polymethylsiloxane. Compositions 43-58 were deposited as films which were then exposed to ultraviolet radiation. The cured films had surfaces which were glossy and slippery. Compositions 43 and 44 deposited as films cured to a depth of 6.35 mm (1/4 inch) when exposed to the ultraviolet radiation from a 152 mm (six inch) sunlamp. These two compositions resulted in milky, opaque, rubbery films which exhibited a gradient type cure being more densely crosslinked at the surface exposed directly to the ultraviolet radiation. Composition 44 became milky after two minutes of exposure to the ultraviolet radiation from the sunlamp. The Valox adhesion of Compositions 49 and 50 is very good. Composition 50 deposited as a film cures to the depth of 6.35 mm (1/4 inch) when exposed to the ultraviolet radiation from a 152 mm (six inch) sunlamp for 10 minutes. The film resulting from Composition 50 was somewhat milky but is not opaque and exhibits a gradient cure. Composition 49 exhibited excellent thin film cure (2.54 µm (0.1 mil)) and excellent adhesion to glass and polycarbonate. Composition 51 deposited as a film and then exposed to the ultraviolet radiation from a sunlamp cured to a depth of 6.35 mm (1/4 inch) and exhibited a gradient type cure. The pot life of Compositions 51-54 was found to be equal to or less than four days and the pot life of Composition 51 was equal to or less than one day.

TABLE VII

| COMPOSITION NUMBER | AMOUNTS WEIGHT PERCENT EPOXY RESIN | POLYMETHYL-SILOXANE | PARTS ACRYLIC RESIN NO. 1 | NO. 2 |
|---|---|---|---|---|
| 43 | 60 | 40 | 20 | 5 |
| 44 | 62.5 | 37.5 | 15 | 5 |
| 45 | 64.7 | 35.3 | 10 | 5 |
| 46 | 66.7 | 33.3 | 5 | 5 |
| 47 | 71.4 | 28.6 | 20 | 10 |
| 48 | 73.3 | 26.7 | 15 | 10 |
| 49 | 75 | 25 | 10 | 10 |
| 50 | 76.5 | 23.5 | 5 | 10 |
| 51 | 69.2 | 30.8 | 20 | 15 |
| 52 | 71.4 | 28.6 | 15 | 15 |
| 53 | 73.3 | 26.7 | 10 | 15 |
| 54 | 75 | 25 | 5 | 15 |
| 55 | 66.7 | 33.3 | 20 | 20 |
| 56 | 69.2 | 30.8 | 15 | 20 |
| 57 | 71.4 | 28.6 | 10 | 20 |
| 58 | 73.3 | 26.7 | 5 | 20 |

EXAMPLE 9

Compositions 59-62 were prepared by mixing the epoxy resin and the polymethylsiloxane as defined in Example 1 with a 50/50 blend of hydroxyl functional organic compounds of the formulae $HOCH_2CH{=}CHCH_2OH$ and $HOCH_2C{\equiv}CCH_2OH$ and with 4 parts of the photosensitive aromatic onium salt as defined in Example 1. The amounts of the epoxy resin and the polymethylsiloxane are shown in TABLE VIII in weight percentages as defined in Example 1. The amount of the hydroxyl functional organic compound blend is shown in TABLE VIII in parts based on 100 parts of the combined weight of the epoxy resin and the polymethylsiloxane.

Compositions 63-66 were prepared in the same manner as Compositions 59-62 except the epoxy resin as defined in Example 5 was used in place of the epoxy resin used in Compositions 59-62. The amounts of the ingredients used are further shown in TABLE VIII. The compositions were deposited as films and then exposed to ultraviolet radiation.

Compositions 59 and 63 cured to films with tacky surfaces. Composition 61 cured to a film with very good adhesion to Plexiglas and would be a good coating for capacitors.

Composition 64 had fair adhesion to plexiglas when cured by the ultraviolet radiation from a sunlamp but cured slowly to depths of 6.35 mm (1/4 inch) and would not be a very useful material for thick section films.

TABLE VIII

| COMPOSITION NUMBER | AMOUNTS: WEIGHT PERCENT EPOXY RESIN | POLYMETHYL-SILOXANE | PARTS: BLEND OF ORGANIC COMPOUNDS |
|---|---|---|---|
| 59 | 75 | 25 | 15 |
| 60 | 76.5 | 23.5 | 10 |
| 61 | 77.8 | 22.2 | 5 |
| 62 | 78.9 | 21.1 | 2 |
| 63 | 75 | 25 | 15 |
| 64 | 76.5 | 23.5 | 10 |
| 65 | 77.8 | 22.2 | 5 |
| 66 | 78.9 | 21.1 | 2 |

EXAMPLE 10

Compositions 67-74 were prepared by mixing epoxy resin as defined in Example 1, a blend of the polymethylsiloxane as defined in Example 1 and the polymethylsiloxane as defined in Example 2, and the photosensitive aromatic onium salt as defined in Example 1, with furfuryl alcohol. The photosensitive aromatic onium salt was used in an amount of 4 parts based on 100 parts of the combined weight of the epoxy resin and the polymethylsiloxane in each composition. The amounts of the epoxy resin and the polymethylsiloxane are shown in TABLE IX in weight percentages based on the weight of the epoxy resin and the polymethylsiloxane. The amount of the furfuryl alcohol is shown in TABLE IX in parts based on 100 parts of the combined weight of the epoxy resin and the polymethylsiloxane. The compositions were deposited as films and then exposed to ultraviolet radiation from the laboratory care unit described in Example 2. Compositions 68-70 cure fast enough but change from colorless to green-brown upon curing. Composition 67 cures well and does not change color. Compositions 71 and 72 cure to films which exhibit color but not as much as Compositions 68-70.

Composition 73 in a 2.54 μm (0.1 mil) film cures in one second and in a film of about 0.79 mm (1/32 inch) cures to a brown, tough, and flexible film. Composition 73 exhibits fair adhesion to nylon.

Composition 74 in a 2.54 μm (0.1 mil) film cures in about 5 seconds and is otherwise like the film obtained from Composition 73.

TABLE IX

| COMPOSITION NUMBER | AMOUNTS: WEIGHT PERCENT EPOXY RESIN | POLYMETHYLSILOXANE NO. 1 | POLYMETHYLSILOXANE NO. 2 | PARTS: FURFURYL ALCOHOL |
|---|---|---|---|---|
| 67 | 52.6 | 15.8 | 31.6 | 5 |
| 68 | 55.6 | 16.7 | 27.8 | 10 |
| 69 | 58.8 | 17.6 | 23.5 | 15 |
| 70 | 62.5 | 18.75 | 18.75 | 20 |
| 71 | 52.6 | 15.8 | 31.6 | 2 |
| 72 | 55.6 | 16.7 | 27.8 | 1 |
| 73 | 58.8 | 17.6 | 23.5 | 0.5 |
| 74 | 62.5 | 18.75 | 18.75 | 0.25 |

EXAMPLE 11

Compositions 75-79 were prepared by mixing epoxy resin as defined in Example 5, the polymethylsiloxane as defined in Example 2, and 4 parts photosensitive aromatic onium salt as defined in Example 1 with a dihydroxyl organic compound of the formula

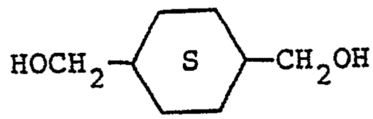 .

The amounts of the epoxy resin and the polymethylsiloxane are shown in TABLE X in weight percentages based on the weight of the epoxy resin and the polymethylsiloxane. The amount of the organic compound is shown in TABLE X in parts based on 100 parts of the combined weight of the epoxy resin and the polymethylsiloxane. The compositions were deposited in films and then exposed to ultraviolet radiation from the laboratory cure unit described in Example 2. The compositions cure in 5 seconds in film thicknesses of greater than 1.27 mm (50 mils).
Composition 75 was the most brittle and the other compositions were more flexible. Composition 75 cured in 5 seconds in a film thickness of 1.59 mm (1/16 inch).

TABLE X

| COMPOSITION NUMBER | EPOXY RESIN | POLYMETHYL-SILOXANE | ORGANIC COMPOUND |
|---|---|---|---|
| 75 | 68.4 | 31.6 | 5 |
| 76 | 66.7 | 33.3 | 10 |
| 77 | 64.7 | 35.3 | 15 |
| 78 | 62.5 | 37.5 | 20 |

EXAMPLE 12

Compositions 79-83 were prepared by mixing epoxy resin as defined in Example 1, a blend of the polymethylsiloxane as defined in Example 1 and the polymethylsiloxane as defined in Example 2, 4 parts of the photosensitive aromatic onium salt as defined in Example 1, and 1 part of furfuryl alcohol based on 100 parts of the epoxy resin and the polymethylsiloxane, and a hydroxyl functional organic compound of the following formula

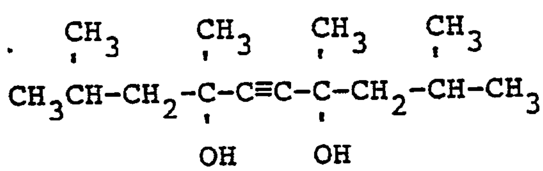 .

The amounts of the epoxy resin and the polymethylsiloxane are shown in TABLE XII in weight percentages based on the weight of the epoxy resin and the polymethylsiloxane. The amount of the organic compound is shown in TABLE XII in parts based on 100 parts of the combined weight of the epoxy resin and the polymethylsiloxane. The compositions were deposited in films and then exposed to the ultraviolet radiation from the laboratory cure unit described in Example 2. The films all cured in thick section to provide a glossy surface and were flexible, moderately tough, and stretchable. These compositions exhibited a color change when curing ranging from green to green-black. Composition 82 cured in 30 minutes to a thickness of 0.79 mm (1/32 inch) when exposed to the ultraviolet radiation from a six inch sunlamp. Composition 83 was the same as Composition 81 except that it also contained 5 parts by weight of an anhydride of the following formula

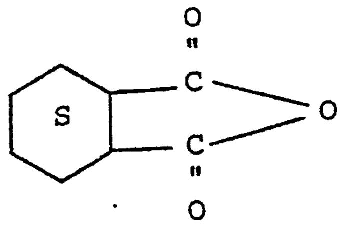

The cured film from Composition 83 was about the same as Composition 81 except it was not quite as good.

TABLE XII

| COMPOSITION NUMBER | EPOXY RESIN | POLYMETHYLSILOXANE NO. 1 | POLYMETHYLSILOXANE NO. 2 | ORGANIC COMPOUND |
|---|---|---|---|---|
| 79 | 60 | 10 | 30 | 1 |
| 80 | 60 | 10 | 30 | 2 |
| 81 | 60 | 10 | 30 | 5 |
| 82 | 63.2 | 5.3 | 26.3 | 10 |
| 83 | 60 | 10 | 30 | 5 |

EXAMPLE 13

Compositions 84-86 were prepared by mixing epoxy resin as defined in Example 1, a blend of the polymethylsiloxane as defined in Example 1 and the polymethylsiloxane as defined in Example 2, and furfuryl alcohol and phenol. These compositions were catalyzed with 4 parts of the photosensitive aromatic onium salt as defined in Example 1. The amounts of the epoxy resin and the polymethylsiloxane are shown in TABLE XIII in weight percentages based on the weight of the epoxy resin and the polymethylsiloxane. The amounts of the furfuryl alcohol and the phenol are shown in TABLE XIII in parts based on 100 parts of the epoxy resin and the polymethylsiloxane. The compositions were deposited in films and then exposed to ultraviolet radiation. Compositions 84 and 85 cured to films of 0.397 mm (1/64 inch) which were flexible, tough, stretchable, and pale green-brown in color.
Composition 86 cured to a film which was flexible and stretchable and had a glossy surface.

TABLE XIII

| COMPOSITION NUMBER | EPOXY RESIN | POLYMETHYLSILOXANE NO. 1 | POLYMETHYLSILOXANE NO. 2 | FURFURYL ALCOHOL | PHENOL |
|---|---|---|---|---|---|
| 84 | 60 | 10 | 30 | 1 | 1 |
| 85 | 60 | 10 | 30 | 1 | 2 |
| 86 | 60 | 10 | 30 | 10 | 10 |

EXAMPLE 14

Compositions 87-89 were prepared by mixing epoxy resin as defined in Example 1, polymethylsiloxane as defined in Example 2, 4 parts of photosensitive aromatic onium salt as defined in Example 1, and a mono-epoxy functional silane of the following formula

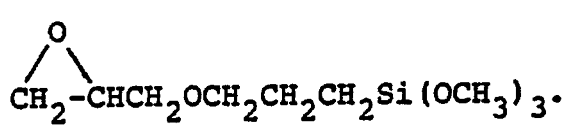

The amounts of the epoxy resin and the polymethylsiloxane are shown in TABLE XIV in weight percentages based on the weight of the epoxy resin and the polymethylsiloxane. The amount of the silane is shown in TABLE XIV in parts based on 100 parts of the epoxy resin and the polymethylsiloxane. The compositions were deposited in films which were then exposed to ultraviolet radiation to cure them. Composition 89 exhibited less integrity than the other compositions and was crumbly.

TABLE XIV

| COMPOSITION NUMBER | EPOXY RESIN | POLYMETHYLSILOXANE | SILANE |
|---|---|---|---|
| 87 | 44.4 | 55.6 | 10 |
| 88 | 50 | 50 | 20 |
| 89 | 57.1 | 42.9 | 30 |

EXAMPLE 15

Compositions 90-93 were prepared by mixing epoxy resin as defined in Example 1, polymethylsiloxane as defined in Example 1, 4 parts of the photosensitive aromatic onium salt as defined in Example 1, 20 parts of the acrylate resin as defined in Example 7, 15 parts of a triacrylic resin CMD-26870 as defined in Example 8, 2 parts of diethoxyacetophenone, and the blend of hydroxyl functional organic compounds as defined in Example 9. The amounts of the epoxy resin and the polymethylsiloxane are shown in TABLE XV in weight percentages based on the weight of the epoxy resin and the polymethylsiloxane. The amount of the blend of the hydroxyl functional organic compounds is shown in TABLE XV in parts based on 100 parts of the combined weight of the epoxy resin and the polymethylsiloxane. Films of the compositions in thicknesses of 2.54 µm (0.1 mil) cure to provide a glossy surface when exposed to ultraviolet radiation. The compositions had a gradient cure when cured in thick section.

TABLE XV

| COMPOSITION NUMBER | EPOXY RESIN | POLYMETHYLSILOXANE | HYDROXYL BLEND |
|---|---|---|---|
| 90 | 66.7 | 33.3 | 1 |
| 91 | 66.7 | 33.3 | 2 |
| 92 | 63.6 | 36.4 | 4 |
| 93 | 63.6 | 36.4 | 6 |

EXAMPLE 16

Compositions 94-97 were prepared by mixing epoxy resin as defined in Example 1, a blend of the polymethylsiloxane as defined in Example 1 and the polymethylsiloxane as defined in Example 2, 4 parts of the photosensitive aromatic onium salt as defined in Example 1, 5 parts of furfuryl alcohol, 5 parts of phenol, and the hydroxyl functional organic compound as defined by the formula in Example 12. The amounts of the epoxy resin and the polymethylsiloxane are shown in TABLE XVI in weight percentages based on the weight of the epoxy resin and the polymethylsiloxane. The amount of the hydroxyl functional organic compound is shown in TABLE XVI in parts based on 100 parts of the combined weight of the epoxy resin and the polymethylsiloxane. Films of the compositions were deposited and then exposed to ultraviolet radiation. Thick films of 6.35 mm (1/4 inch) cured by exposure to the ultraviolet radiation from the laboratory cure unit described in Example 2 in 6 to 10 seconds giving films where those made from Composition 97 were the most flexible. The films cured to provide glossy surfaces and they had a color of light gray. These compositions when exposed to the ultraviolet radiation from a 152 mm (six inch) sunlamp cured to a depth of 6.35 mm (1/4 inch) in about 20 minutes.

TABLE XVI

| COMPOSITION NUMBER | EPOXY RESIN | POLYMETHYLSILOXANE NO. 1 | NO. 2 | HYDROXYL COMPOUND |
|---|---|---|---|---|
| 94 | 88.2 | 5.9 | 5.9 | 5 |
| 95 | 87.5 | 6.25 | 6.25 | 10 |
| 96 | 85.7 | 7.1 | 7.1 | 20 |
| 97 | 83.3 | 8.3 | 8.3 | 30 |

EXAMPLE 17

Compositions 98-101 were prepared by mixing epoxy resin as defined in Example 5, a blend of the polymethylsiloxane as defined in Example 1 and the polymethylsiloxane as defined in Example 2, 4 parts of the photosensitive aromatic onium salt as defined in Example I, 5 parts of furfuryl alcohol, 5 parts of phenol, and the hydroxyl functional organic compound as defined in Example 12. The amounts of the epoxy resin and the polymethylsiloxane are shown in TABLE XVII in weight percentages based on the weight of the epoxy resin and the polymethylsiloxane. The amount of the hydroxyl functional organic compound is shown in TABLE XVII in parts based on 100 parts of the combined weight of the epoxy resin and the polymethylsiloxane. Films of the compositions were deposited and then exposed to ultraviolet radiation. The cured film made from Composition 101 was the most flexible and rubbery. The cured film made from Composition 98 was the most brittle.

TABLE XVII

| COMPOSITION NUMBER | EPOXY RESIN | POLYMETHYLSILOXANE NO. 1 | NO. 2 | HYDROXYL COMPOUND |
|---|---|---|---|---|
| 98 | 88.2 | 5.9 | 5.9 | 5 |
| 99 | 87.5 | 6.25 | 6.25 | 10 |
| 100 | 85.7 | 7.1 | 7.1 | 20 |
| 101 | 83.3 | 8.3 | 8.3 | 30 |

**Claims**

1. A composition curable by exposure to ultraviolet radiation comprising
(A) a cationically curable organic epoxide having at least two epoxy groups per molecule,
(B) a polyorganosiloxane having at least two hydroxyl-functional polyether groups bonded to the polyorganosiloxane through a silicon-carbon bond, and
(C) a photosensitive aromatic onium salt, and
(D) an acrylate resin having at least one acrylate group per molecule.

2. The composition according to claim 1 in which the epoxide of (A) is present in an amount of from 35 to 80 percent by weight, the siloxane of (B) is present in an amount of from 20 to 65 percent by weight, and the acrylate resin is present in an amount of from 5 to 45 parts by weight based on 100 parts by weight of the combined weight of (A) and (B) where the weight percentages of (A) and (B) are based on the combined weight of (A) and (B) present in the composition.

3. The composition according to claim 1 in which the epoxide of (A) is a cycloaliphatic epoxy resin.

4. The composition according to claim 3 in which the siloxane of (B) is a polymethylsiloxane and the hydroxyl-functional polyether groups are hydroxyl terminated polyoxyethylene bonded to silicon atoms through a propylene radical.

5. The composition according to claim 4 in which the cycloaliphatic epoxy resin has the formula

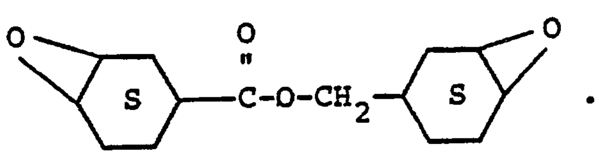

6. The composition according to claim 5 in which the acrylate resin has the formula

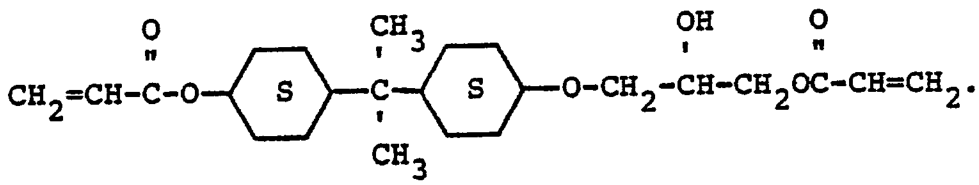

7. The composition according to claim 6 in which the photosensitive aromatic onium salt is a 50 percent solution of a triaryl sulfonium salt dissolved in propylene carbonate.

8. The composition according to claim 1 further comprising a photoinitiator.

9. The composition according to claim 8 in which the photoinitiator is diethoxyacetophenone.

10. The composition according to claim 2 further comprising a photoinitiator.

11. The composition according to claim 10 in which the photoinitiator is diethoxyacetophenone.

12. The composition according to claim 7 further comprising a photoinitiator.

13. The composition according to claim 12 in which the photoinitiator is diethoxyacetophenone.

14. The composition according to claim 1 in which the acrylate resin is a blend of two acrylate resins where one acrylate resin has the formula

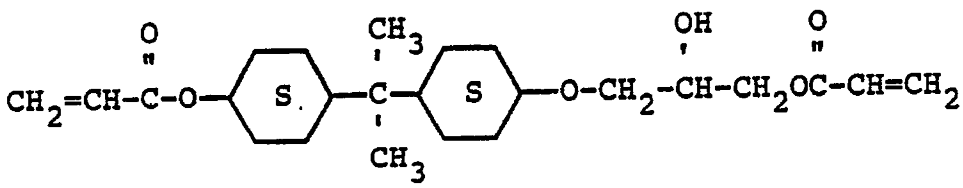

and the other acrylate resin is a triacrylate.

15. The composition according to claim 14 in which the epoxide of (A) is a cycloaliphatic epoxy resin.

16. The composition according to claim 15 in which the cycloaliphatic epoxy resin has the formula

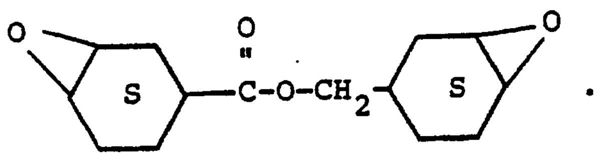

17. The composition according to claim 16 in which the photosensitive aromatic onium salt is a 50 percent solution of a triaryl sulfonium salt dissolved in propylene carbonate.

18. The composition according to claim 17 further comprising a photoinitiator.

19. The composition according to claim 18 in which the photoinitiator is diethoxyacetophenone.

20. The composition according to claim 2 further comprising an organic compound having at least one carbon bonded hydroxyl group and being composed of carbon, hydrogen, and oxygen.

21. The composition according to claim 20 in which the organic compound is a blend of $HOCH_2CH{=}CHCH_2OH$ and $HOCH_2C{\equiv}CCH_2OH$ where the blend is present in an amount of from 1 to 10 parts by weight based on 100 parts by weight of the combined weight of (A) and (B).

22. The composition according to claim 20 in which the organic compound is furfuryl alcohol present in an amount of from 0.1 to 20 parts by weight based on the combined weight of (A) and (B).

23. The composition according to claim 20 in which the organic compound has the formula

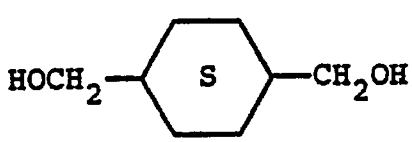

which is present in an amount of from 1 to 20 parts by weight based on 100 parts by weight of the combined weight of (A) and (B).

## Patentansprüche

1. Durch Aussetzen ultravioletter Strahlung härtbare Zusammensetzung enthaltend:

(A) ein kationisch härtbares organisches Epoxid, das mindestens 2 Epoxygruppen pro Molekül aufweist,

(B) ein Polyorganosiloxan, das mindestens zwei hydroxyfunktionelle Polyethergruppen aufweist, die mit dem Organopolysiloxan durch eine Silizium-Kohlenstoffbindung verbunden sind und
(C) ein photoempfindliches aromatisches Oniumsalz und
(D) ein Acrylatharz mit mindestens einer Acrylatgruppe pro Molekül.

2. Zusammensetzung nach Anspruch 1, dadurch gekennzeichnet, daß das Epoxid von (A) in einer Menge von 35 bis 80 Gew.% vorhanden ist, daß Siloxan von (B) in einer Menge von 20 bis 65 Gew.% vorhanden ist, daß Acrylatharz in einer Menge von 5 bis 45 Gewichtsteilen bezogen auf 100 Gewichtsteile der kombinierten Gewichte von (A) und (B) vorhanden ist, wobei sich die Prozentangaben (A) und (B) auf das kombinierte Gewicht von den in der Zusammensetzung vorhandenen (A) und (B) beziehen.

3. Zusammensetzung nach Anspruch 1, dadurch gekennzeichnet, daß das Epoxid von (A) ein cycloaliphatisches Epoxyharz ist.

4. Zusammensetzung nach Anspruch 3, dadurch gekennzeichnet, daß das Siloxan von (B) ein Polymethylsiloxan ist und die hydroxyfunktionellen Polyethergruppen endständige Hydroxylgruppen aufweisende Polyoxyethylene sind, die an Siliziumatome über einen Propylenrest gebunden sind.

5. Zusammensetzung nach Anspruch 4, dadurch gekennzeichnet, daß das cycloaliphatische Epoxyharz die Formel aufweist

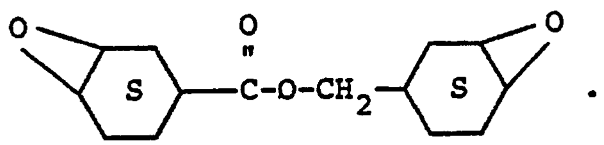

6. Zusammensetzung nch Anspruch 5, dadurch gekennzeichnet, daß das Acrylatharz die Formel aufweist

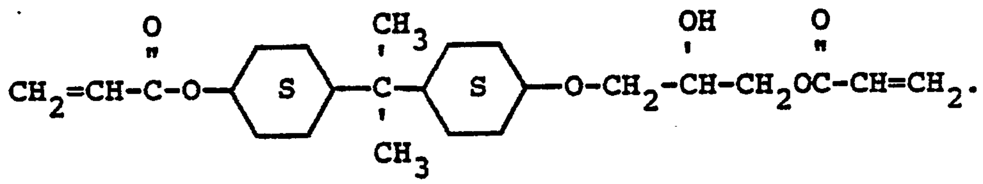

7. Zusammensetzung nach Anspruch 6, dadurch gekennzeichnet, daß das photoempfindliche aromatische Oniumsalz eine 50%ige Lösung eines Triarylsulfoniumsalzes gelöst in Propylencarbonat ist.

8. Zusammensetzung nach Anspruch 1, dadurch gekennzeichnet, daß sie weiterhin einen Photoinitiator enthält.

9. Zusammensetzung nach Anspruch 8, dadurch gekennzeichnet, daß der Photoinitiator Diethoxyacetophenon ist.

10. Zusammensetzung nach Anspruch 2, dadurch gekennzeichnet, daß sie weiterhin einen Photoinitiator enthält.

11. Zusammensetzung nach Anspruch 10, dadurch gekennzeichnet, daß der Photoinitiator Diethoxyacetophenon ist.

12. Zusammensetzung nach Anspruch 7, dadurch gekennzeichnet, daß sie weiterhin einen Photoinitiator enthält.

13. Zusammensetzung nach Anspruch 12, dadurch gekennzeichnet, daß der Photoinitiator Diethoxyacetophenon ist.

14. Zusammensetzung nach Anspruch 1, dadurch gekennzeichnet, daß das Acrylatharz eine Mischung von zwei Acrylatharzen ist, wobei ein Acrylatharz die Formel aufweist

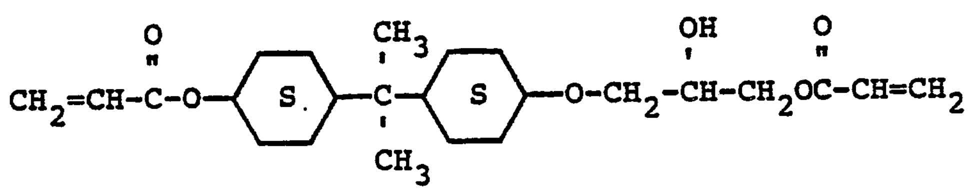

und das andere Acrylatharz ein Triacrylat ist.

15. Zusammensetzung nach Anspruch 14, dadurch gekennzeichnet, daß das Epoxid von (A) ein cycloaliphatisches Epoxyharz ist.

16. Zusammensetzung nach Anspruch 15, dadurch gekennzeichnet, daß das cycloaliphatische Epoxyharz die Formel aufweist

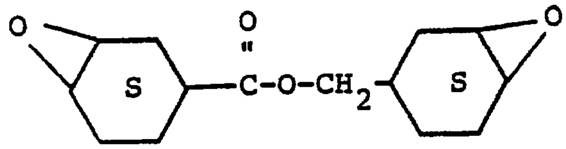

.

17. Zusammensetzung nach Anspruch 16, dadurch gekennzeichnet, daß das photoempfindliche aromatische Oniumsalz eine 50-%ige Lösung eines Triarylsulfoniumsalzes, gelöst in Propylencarbonat ist.

18. Zusammensetzung nach Anspruch 17, dadurch gekennzeichnet, daß sie weiterhin einen Photoinitiator enthält.

19. Zusammensetzung nach Anspruch 18, dadurch gekennzeichnet, daß der Photoinitiator Diethoxyacetophenon ist.

20. Zusammensetzung nach Anspruch 2, dadurch gekennzeichnet, daß sie weiterhin eine organische Verbindung enthält mit mindestens einer an Kohlenstoff gebundenen Hydroxylgruppe, die aus Kohlenstoff, Wasserstoff und Sauerstoff zusammengesetzt ist.

21. Zusammensetzung nach Anspruch 20, dadurch gekennzeichnet, daß die organische Verbindung eine Mischung von $HOCH_2CH{=}CHCH_2OH$ und $HOCH_2C{\equiv}CCH_2OH$, wobei die Mischung anwesend ist in einer Menge von 1 bis 10 Gewichtsteilen bezogen auf 100 Gewichtsteile des kombinierten Gewichtes von (A) und (B).

22. Zusammensetzung nach Anspruch 20, dadurch gekennzeichnet, daß die organische Verbindung Furfurylalkohol ist, anwesend in einer Menge von 0.1 bis 20 Gewichtsteile bezogen auf das kombinierte Gewicht von (A) und (B).

23. Zusammensetzung nach Anspruch 20, dadurch gekennzeichnet, daß die organische Verbindung die Formel aufweist

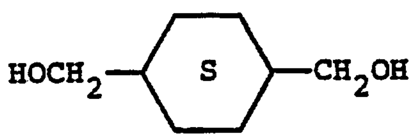

die anwesend ist in einer Menge von 1 bis 20 Gewichtsteilen bezogen auf 100 Gewichtsteile des kombinierten Gewichts von (A) und (B).

## Revendications

1. Une composition durcissable par exposition à un rayonnement ultraviolet, comprenant

(A) un époxyde organique cationiquement durcissable ayant au moins deux groupes époxys par molécule,

(B) un polyorganosiloxane ayant au moins deux groupes polyéthers à fonction hydroxyle liés au polyorganosiloxane par une liaison silicium-carbone, et

(C) un sel d'oniom aromatique photosensible, et

(D) une résine acrylate ayant au moins un groupe acrylate par molécule.

2. La composition selon la revendication 1, dans laquelle l'époxyde de (A) est présent en une quantité de 35 à 80 pour cent en poids, le siloxane de (B) est présent en une quantité de 20 à 65 pour cent en poids et la résine d'acrylate est présente en une quantité de 5 à 45 parties en poids sur la base de 100 parties du poids total de (A) et (B) où les pourcentages en poids de (A) et (B) sont pris par rapport au poids total de (A) et (B) présents dans la composition.

3. La composition selon la revendication 1, dans laquelle l'époxyde de (A) est une résine époxy cycloaliphatique.

4. La composition selon la revendication 3, dans laquelle le siloxane de (B) est un polyméthylsiloxane et les groupes polyéthers à fonction hydroxyle sont des groupes polyoxyéthylènes terminés par un groupe hydroxyle et liés aux atomes de silicium par l'intermédiaire d'un radical propylène.

5. La composition selon la revendication 4, dans laquelle la résine époxy cycloaliphatique répond à la formule

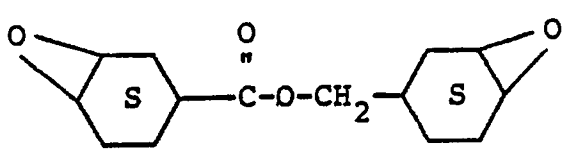

.

6. La composition selon la revendication 5, dans laquelle la résine acrylate répond à la formule

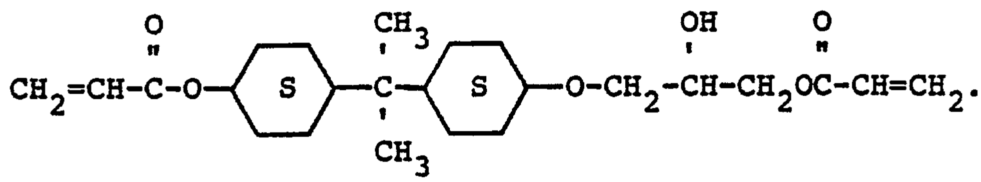

7. La composition selon la revendication 6, dans laquelle le sel d'onium aromatique photosensible est une solution à 50 pour cent d'un sel de triaryl-sulfonium dissous dans du carbonate de propylène.

8. La composition selon la revendication 1, comprenant de plus un photo-initiateur.

9. La composition selon la revendication 8, dans laquelle le photo-initiateur est la diéthoxyacétophénone.

10. La composition selon la revendication 2, comprenant de plus un photo-initiateur.

11. La composition selon la revendication 10, dans laquelle le photo-initiateur est la diéthoxyacétophénone.

12. La composition selon la revendication 7, comprenant de plus un photo-initiateur.

13. La composition selon la revendication 12, dans laquelle le photo-initiateur est la diéthoxyacétophénone.

14. La composition selon la revendication 1, dans laquelle la résine acrylate est un mélange de deux résines acrylates où une des résines acrylates répond à la formule

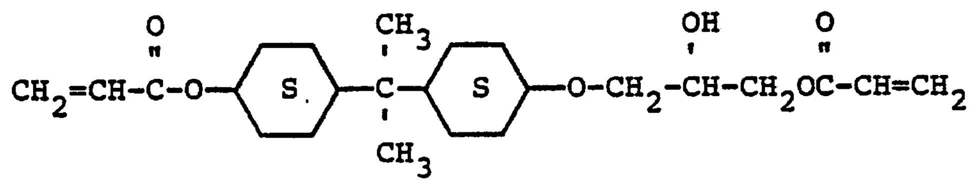

et l'autre résine acrylate est un triacrylate.

15. La composition selon la revendication 14, dans laquelle l'époxyde de (A) est une résine époxy cycloaliphatique.

16. La composition selon la revendication 15, dans laquelle la résine époxy cycloaliphatique répond à la formule

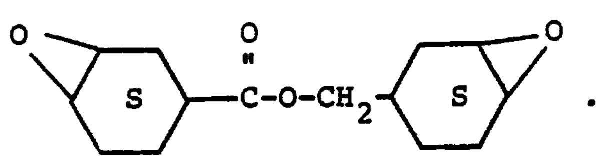

17. La composition selon la revendication 16, dans laquelle le sel d'onium aromatique photosensible est une solution à 50 pour cent d'un sel de triaryl-sulfonium dissous dans du carbonate de propylène.

18. La composition selon la revendication 17, comprenant de plus un photo-initiateur.

19. La composition selon la revendication 18, dans laquelle le photo-initiateur est la diéthoxyacétophénone.

20. La composition selon la revendication 2, comprenant de plus un composé organique ayant au moins un groupe hydroxyle lié au carbone et qui est composé de carbone, hydrogène et oxygène.

21. La composition selon la revendication 20, dans laquelle le composé organique est un mélange de $HOCH_2CH{=}CHCH_2OH$ et de $HOCH_2C{\equiv}CCH_2OH$, le mélange étant présent en une quantité de 1 à 10 parties en poids sur la base de 100 parties du poids total de (A) et (B).

22. La composition selon la revendication 20, dans laquelle le composé organique est l'alcool furfurylique qui est présent en une quantité de 0,1 à 20 parties en poids sur la base du poids total de (A) et (B).

23. La composition selon la revendication 20, dans laquelle le composé organique répond à la formule

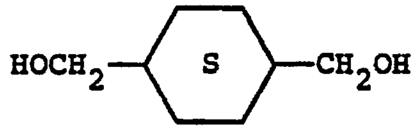

et est présent en une quantité de 1 à 20 parties en poids sur la base de 100 parties du poids total de (A) et (B).